Europäisches Patentamt

European Patent Office

Office européen des brevets

(11) Publication number: **0 275 661 B1**

(12) **EUROPEAN PATENT SPECIFICATION**

(45) Date of publication of patent specification: **22.04.92**    (51) Int. Cl.5: **H01M 8/24**

(21) Application number: **87310960.7**

(22) Date of filing: **14.12.87**

(54) **Fuel cell and method for its manufacture.**

(30) Priority: **15.12.86 US 941492**

(43) Date of publication of application:
**27.07.88 Bulletin 88/30**

(45) Publication of the grant of the patent:
**22.04.92 Bulletin 92/17**

(84) Designated Contracting States:
**AT BE DE ES FR GB IT LU NL SE**

(56) References cited:
**US-A- 4 413 041**
**US-A- 4 476 196**
**US-A- 4 476 197**
**US-A- 4 476 198**
**US-A- 4 510 212**

(73) Proprietor: **ALLIED-SIGNAL INC. (a Delaware corporation)**
**Columbia Road and Park Avenue P.O. Box 2245R**
**Morristown New Jersey 07960(US)**

(72) Inventor: **Kotchick, David M.**
**301 John Way**
**San Pedro California(US)**

(74) Representative: **Rees, David Christopher**
**Kilburn & Strode 30 John Street**
**London WC1N 2DD(GB)**

## Description

The invention relates to solid oxide fuel cells and to a method for fabricating the fuel cell core.

A fuel cell is basically a galvanic conversion device that chemically reacts hydrogen or a hydrocarbon fuel and an oxidant within catalytic confines to produces a DC electrical output. In a fuel cell, cathode material defines the passageways for the oxidant and anode material defines the passageways for the fuel, and an electrolyte separates the cathode and anode materials. The fuel and oxidant, typically as gases, are continuously passed through the cell passageways separated from one another, and the fuel and oxidant discharged from the fuel cell generally remove the reaction products and heat generated in the cell. The fuel and oxidant are the working gases and as such as typically not considered an integral part of the fuel cell itself.

The type of fuel cell for which this invention has direct applicability is known as the solid electrolyte or solid oxide fuel cell, where the electrolyte is in solid form in the fuel cell. In the solid oxide fuel cell, hydrogen or a higher order hydrocarbon is used as the fuel and oxygen or air is used as the oxidant, and the operating temperature of the fuel cell is between $700°C$ and $1,100°C$.

The hydrogen passing through the fuel cell reacts with oxide ions on the anode to yield water which is carried off in the fuel flow stream with the release of electrons into the anode material, and the oxygen reacts with the electrons on the cathode surface to form the oxide ions which pass into the cathode material. Electrons flow from the anode through an appropriate external load to the cathode, and the circuit is closed internally by the transport of oxide ions through the electrolyte. The electrolyte insulates the cathode and anode from one another with respect to electron flow, but permits oxygen ions to flow from the cathode to the anode. Thus, the reactions are, at the:

cathode      $1/2\ O_2\ +\ 2e\text{-}\ =\ O^{-2}$
anode         $H_2\ +\ O^{-2}\ =\ H_2O\ +\ 2e\text{-}$

The overall cell reaction is

$H_2\ +\ 1/2\ O_2\ =\ H_2O.$

In addition to hydrogen, the fuel can be derived from a hydrocarbon such as methane ($CH_4$) reformed by exposure to steam at $390°C$ or above, which initially produces carbon monoxide (CO) and three molecules of hydrogen. As hydrogen is consumed, a shift in reaction occurs to

$CO\ +\ H_2O\ =\ CO_2\ +\ H_2.$

The overall reaction of hydrocarbons in the cell is illustrated by

$CH_4\ =\ 2O_2\ =\ CO_2\ +\ 2H_2O$

Inasmuch as the conversion within the fuel cell is electrochemical, the thermal limitations of the Carnot cycle are circumvented. Therefore, efficiencies in the range exceeding 50% fuel heat energy conversion to electrical output can be obtained. This is much higher than equivalent thermal engines using the same fuel conversion, including even a conventional diesel powered engine.

The electrolyte isolates the fuel and oxidant gases from one another while providing a medium allowing oxygen ion transfer, as well as voltage build up on opposite sides of the electrolyte. The electrodes (cathode and anode) provide paths for the internal movement of electrical current within the fuel cell to the cell terminals, which are connected to an external load. The operating voltage across each cell is of the order of 0.7 volts maximum, so the individual cells must be placed in electrical series to obtain a useful load voltage. Diffusion of the working gases (hydrogen or oxygen) through the electrodes to the electrolyte also limits the cell performance. However, fuel and oxidant must diffuse away from the flow stream in the respective passageways through the electrode to the reaction sites. The fuel and oxidant diffuse through the electrodes to the electrolyte and react at or near the three-phase boundary of the gases, the electrodes (anode and cathode), and electrolyte, where electrochemical conversion occurs.

While it is possible to extract great quantities of energy from the fuel thermally and electrically it is also inherently inefficient to extract such energies to the complete depletion of the fuel and oxidant. As the hydrogen partial pressure of the fuel gas decreases along the length of the fuel passageways, less voltage is generated near or at the downstream end. Complete conversion of the fuel in the fuel cell is thus not sought as it is intrinsically inefficient in the overall output of the cell voltage. For both a single cell and cells in gas flow series the maximum theoretical voltage decreases along the length of the cell. Practical fuel cells therefore consume 80 to 90% of the fuel because the cell voltage decreases rapidly as the hydrogen becomes less than 5% of the fuel gas. The reduction in maximum cell voltage as the fuel is consumed is an important limitation.

Past fuel cell designs have centred on a series of solid oxide fuel cells using a ceramic support tube and the electrodes (anode and cathode) and electrolyte built up as layers on the support tube. The support tube is confined in a sealed housing, and the fuel and oxidant are manifolded to the housing and the reaction products are ported from the housing as required. Depending on the layer build-up, the fuel is either conveyed internally of the support tube and the oxidant is conveyed externally of the support tube or vice versa. A practical fuel cell unit would be composed of many such tubes supported within an exterior housing, and manifolding would separate and direct the fuel and oxidant to the tubes.

A typical support tube might be formed of calcium stabilised zirconia ($ZrO_2$ + $CaO$); the cathode typically would be applied to the exterior face of the support tube and might be in the form of lanthanun manganite ($LaMnO_3$). The electrolyte would be layered over a portion of the cathode and might comprise, for example yttria stabilised zirconia ($ZrO_2$ + $Y_2O_3$); the anode would be layered over the electrolyte and might comprise for example a cobalt yttria stabilised zirconia cermet or mixture ($CO$ + $ZrO_2$ + $Y_2O_3$). The oxidant would thereby flow internally of the structural tube while fuel would be circulated externally of the tube. For part of the cell where a series connection is to be made with an adjacent cell, the interconnection would be layered over the cathode at this location instead of the electrolyte and anode, to engage the anode of the adjacent cell. The interconnection might comprise for example, lanthanum chromite ($LaCrO_3$).

To form this type of fuel cell, the support tube must be formed with a high degree of porosity. Even with 40% porosity, the layered anode and cathode represent large diffusion barriers. The diffusion losses increase very steeply at high current densities and represent a limit on current and hence power. The minimum size of the support tube has been about 1cm in diameter, with a side wall about 1mm thick. A limiting factor of this support tube core arrangement is the length of path that the current must pass along the cathode and anode materials thereby inducing significant electrical resistance losses. In one effort to minimise this, the respective tubes have been shortened lengthwise and stacked end-to-end on one another, and the anodes and cathodes of the successive respective tubes have been interconnected in a serial fashion with an interconnection. This gives a single tube through which the fuel and/or oxidant passes, while the serial connection produces a higher voltage cumulative of the total number of serially interconnected individual tubes. The current flow is in line with the direction of the fuel and/or oxidant flow, namely axially of the tube configuration.

Moreover, the tube supports are non-productive and heavy so that the power and energy densities suffer when compared to other forms of energy conversion, including even the liquid electrolyte fuel cells more commonly operated at lower temperatures.

In contrast to the tubular type fuel cells of the prior art, cellular type fuel cell cores (see US Patent No.4,476,198) of the prior art made by a process whereby the compositions used for the four materials are put into four distinct slurries. Each slurry is then placed in a reservoir of a sequeegee-type device which is pulled over a flat surface. A film of the material is deposited on the flat surface and hardens or plasticises into a layer of the material having the desired thickness. In this manner the electrolyte wall or interconnection wall is formed by a first layer of anode material followed by a layer of either electrode or interconnect material and finally by a layer of the cathode material. The layers are bonded together since the binder system is the same in each layer.

US Patent No. 4,476,198 (Ackerman, et al) discloses a monolithically formed core consisting only of materials active in the electrochemical reactions. This means that the electrolyte and interconnection walls of the core would be formed respectively, only of anode and cathode materials layered on the opposite sides of electrolyte material, or on the opposite sides of interconnect material. This allows the use of very thin material layers and very thin resulting composite core walls. Each layer of anode and cathode is deposited on the electrolyte or interconnect material using a stencil or template device. The thin composite core walls can be shaped to define small passageways, while yet having sufficient structural integrity to withstand the fluid pressures generated by gas flow through the passageways and the mechanical stresses due to the weight of the stacked core walls on one another. This beneficially increases the power density of the fuel cell because of its reduced size and weight.

US Patent No. 4,476,196 (Poeppel, et al) discloses a monolithic core construction having the flow passageways for the fuel and for the oxidant gases extended transverse to one another, whereby full face core manifolding can be achieved for these gases and their reaction products. The core construction provides that only anode material surround each fuel passageway and only cathode material surround each oxidant passageway, each anode and each cathode material further being sandwiched at spaced opposing sides between electrolyte and interconnect materials. These composite anode and cathode wall structures are further alternately stacked on one another (with the separating electrolyte or interconnect material typically being a single common layer) whereby the fuel and oxidant passageways are disposed transverse to one another.

US Patent No. 4,501,212 (Fraioli) discloses a core construction having both parallel and cross flow paths for the fuel and the oxidant gases. Each interconnect wall of the cell is formed as a sheet of inert support material including spaced small plugs of interconnect material, the cathode and anode materials being formed as layers on opposite sides of each sheet and being electrically contacted together by the plugs of the interconnect material. Each interconnect wall in a wavy shape is connected along spaced, generally parallel, line-like contact areas between corresponding spaced pairs of generally parallel electrolyte walls, operable to define one tier of generally parallel flow passageways for the fuel and oxidant gases. Alternate tiers are arranged to have the passageways disposed normal to one another.

It is an object of the invention to provide an improved solid oxide fuel cell core preferably having a complicated and compact cross section and having many adjacent small passageways for containing the fuel and oxidant gases, and also to provide a method of making such a fuel cell.

According to the invention, there is provided a solid electrolyte fuel cell for electronically combining a fuel and an oxidant for the generation of a galvanic output comprising: a core defining a series of fuel passageways and a series of oxidant passageways; a means for directing the fuel and oxidant for flow through the respective fuel and oxidant passageways; and electrical conductors for directing the galvanic output from the fuel cell to an exterior circuit; in which the core comprises a series of electrolyte walls separated by a series of interconnect walls, each electrolyte wall comprising a layer of electrolyte material sandwiched between a layer of electrically conductive cathode material on one side an a layer of electrically conductive anode material on the other side, each interconnect wall comprising a layer of an electrically conductive interconnect material sandwiched between and electrically connecting a layer of cathode material on one side and a layer of anode material on the other side; the electrolyte and interconnect walls being alternatively stacked to define the plurality of fuel and oxidant passageways where the fuel passageways are defined only by the anode material and the oxidant passageways are defined only by the cathode material; the core being substantially devoid of any composite inert material and being monolithic; characterised in that the means for directing the fuel and oxidant includes a manifold section at one end of the core, the manifold section including: an inlet manifold conduit for one of the fuel and the oxidant and a turning section located between the core and the manifold conduit; the turning section including fuel manifold passageways and oxidant manifold passageways defined by the alternately stacked electrolyte and interconnect walls; the fuel manifold passageways being arranged to overlap and to be relatively inclined with respect to the oxidant manifold passageways; the manifold passageways respectively having heights which are a fraction of the height of the fuel and oxidant passageways in the core, whereby the manifold passageways communicate with their respective core passageways and the inlet manifold conduit is connected by the appropriate one of the manifold passageways to its core passageway.

Preferably, the means for directing the fuel and oxidant is also substantially devoid of composite inert material.

Preferably, the electrolyte and interconnect walls define the core and the means for directing the fuel and oxidant.

Preferably, the manifold section includes a second manifold conduit for the other of the fuel and the oxidant which is similarly connected by the appropriate one of the manifold passageways to its core passageway.

Preferably, each interconnect wall comprises a generally flat core section and a manifold section at each end of the core section, each manifold section including two manifold openings in wall and manifold corrugations extending between one of the manifold openings and the core section. Conveniently, therefore, one of the openings is the fuel manifold conduit and the other is the oxidant manifold conduit and the corrugations extend between the core section and fuel manifold conduit opening.

Preferably, each electrolyte wall comprises a core section having electrolyte wall core section corrugations extending the length of the section and an electrolyte wall manifold section at each end of the core section, each electrolyte wall manifold section defining two openings and having oxidant manifold corrugations extending from the end of the electrolyte wall core section corrugations to one of the openings. Conveniently, therefore, one of the openings defines a portion of the oxidant manifold conduit and the other defines a portion of the fuel manifold conduit, the oxidant manifold corrugations extending from the electrolyte wall core section corrugations to the oxidant manifold opening.

In an alternative form, the means for directing the fuel and oxidant includes a manifold at one end of the core, the manifold including a fuel manifold conduit and fuel manifold passageways extending from the fuel manifold conduit to the plurality of fuel passageways in the core, and an oxidant manifold conduit and oxidant manifold passageways extending from the oxidant manifold conduit to the plurality of oxidant passageways in the core.

In a further alternative form, the means for directing the fuel and oxidant comprises an inlet and outlet manifold at each end of the core, each of these manifolds at each end of the core, each of these manifolds defining a conduit and a plurality of passages extending from the conduit and a to either the plurality of fuel passageways or the plurality of oxidant passageways in the core.

Generally, therefore, the invention may be considered to comprise a monolithic solid oxide fuel cell comprising a core and inlet and outlet manifolds for both a fuel and an oxidant. The core includes a plurality of electrolyte walls and interconnect walls. The electrolyte walls comprise a layer of electrolyte material sandwiched between layers of anode and cathode material while the interconnect walls comprise a layer of interconnect material sandwiched between a layer of anode and cathode material. One or both the electrolyte and interconnect walls are shaped such that when the interconnect walls are alternately stacked with the electrolyte walls, a plurality of fuel passages and oxidant passages are formed. Each fuel passage is defined only by anode material and each oxidant passage is defined only by cathode material. The fuel cell further includes means to direct the galvanic output from the anode and cathode materials to an electrical power absorber or to a storage battery.

Thus, the invention can provide a monolithic fuel cell core which is comprises solely and exclusively of the active anode, cathode, electrolyte and interconnect materials, and with no nonactive materials for support.

According to another aspect of the invention, there is provided a method of constructing a monolithic fuel cell core made up from electrolyte and interconnect walls, which comprises:
mixing anode, cathode, electrolyte and interconnect powders separately with a binder and a plasticiser to form four separate batches of anode, a cathode, an electrode and an interconnect material; forming a tape of each material with a desired width and thickness; forming two flexible trilayer tapes of a desired thickness, one trilayer tape comprising a layer of electrode material sandwiched between an anode and a cathode tape and the other trilayer tape comprising an interconnect tape sandwiched between an anode tape and a cathode tape; cutting the two trilayer tapes to length; moulding one or both trilayer tapes to the desired shape; alternately stacking the trilayer tapes to form the fuel cell core; extracting the binder from each tape; and sintering the core to form a monolithic structure; characterised in that the forming steps are performed by roll milling the material, e.g. in a two roll mill. The tapes may be flexible.

Preferably, the mixing step is carried out in a high intensity mixer. This may also cause the batches to be heated. The materials may be heated during the forming steps and may be further calendered to the by compressor moulding or by vacuum forming the cut tapes. Preferably, the core is allowed to cool to room temperature after extracting the binders.

Generally, therefore a method of fabricating the fuel cell core according to the invention may be considered to comprise the steps of individually mixing the anode, cathode, electrolyte and interconnect materials with a binder system to form a mass having a plastic consistency and then roll milling single layer tapes of each material. Three of the single layer tapes are then roll milled into a trilayer tape; i.e. electrolyte and interconnect walls. Thereafter, each tape is cut to the appropriate size and one or both are moulded into the desired wall shape. The formed electrolyte walls are alternately stacked with the formed interconnect walls until a fuel cell core of the desired size is obtained. The fuel cell core is then subjected to a controlled heat up cycle in order first to remove the binder and then at a higher frequency sintering the core in order to fuse the remaining ceramic particles which are in contact with one another.

Thus, the invention can also provide a method for fabricating a solid oxide fuel cell core having thin electrolyte and interconnect walls, each comprises respectively of the anode and cathode materials layered onto opposite sides of the electrolyte and interconnect materials.

The invention may also be considered to extend to a monolithic solid oxide fuel cell for electrochemically combining a fuel and an oxidant for the generation of galvanic output, comprising: a fuel cell core defining a plurality of fuel and oxidant passageways formed by alternately stacked electrolyte and interconnect walls; inlet and outlet manifolds at each end of the plurality of passageways, each of the manifolds defining fuel and oxidant manifold conduits and fuel and oxidant manifold passages, the fuel manifold passages flow connecting the fuel manifold conduit to the plurality of fuel passageways in the core, and the oxidant manifold passages flow connecting the oxidant manifold conduit to the plurality of oxidant passageways in the core, the inlet and outlet manifolds formed from the electrolyte and interconnect walls; and means for directing the galvanic output from the fuel cell core to an exterior circuit.

In such a case, the interconnect wall comprises a layer of interconnect material sandwiched between an anode material on one side and a cathode material on the other, while, the electrolyte wall comprises a layer of electrolyte material sandwiched between anode material on one side and a cathode material on the other. The walls may be moulded to the desired shape. Each wall may define the fuel cell core section and the inlet and outlet manifolds at each end of the core section.

The invention may also be considered to extend to a fuel cell comprising: a plurality of alternately stacked electrolyte walls and interconnect walls, each wall having a core section and a manifolding section which includes a turning section and openings defining a portion of fuel and oxidant conduits, the plurality of walls defining a plurality of fuel and oxidant passageways therebetween in the core section, a plurality of fuel and oxidant turning section passages and fuel and oxidant conduits in the manifolding section, the fuel turning section passages being disposed between, and flow connecting, the plurality of fuel passageways in the core section to the fuel conduit, and the oxidant turning section passages being disposed between and flow connecting the plurality of oxidant passageways to the oxidant conduit; and means for directing galvanic output from the fuel cell core to an external circuit.

In such a case, the electrolyte and interconnect walls may have a manifolding section at each end of the core section. The cell may also include an insulating material enclosing the electrolyte and interconnect walls and defining openings which align with the fuel and oxidant conduits.

The invention may also extend to a method of constructing a monolithic fuel cell core made entirely of trilayer electrolyte and interconnect walls, the method comprising the steps of: mixing powders required to make an anode, a cathode, an electrolyte and an interconnect material separately with a plasticiser and a binder to form a batch of each of the materials; rolling each batch of the materials into a tape having a desired width and thickness; rolling a tape of the anode and a tape of the cathode material on each side of a tape of electrolyte and interconnect materials, thereby forming a trilayer electrolyte wall and a trilayer interconnect wall; cutting the trilayer tapes to length; moulding at least one of the trilayer tapes into a desired shape; alternately stacking the two trilayer tapes to the desired height to form the core; extracting the binder from the core; and sintering the core to form the monolithic fuel cell core.

The invention may be carried into practice in various ways and some embodiments will now be described by way of example with reference to the accompanying drawings, in which:

Figure 1 is a perspective view, partially broken away of a fuel cell formed according to the present invention;

Figure 2 is a partial, enlarged sectional view when taken along line 2-2 of Figure 1;

Figures 3A and 3B are plan views of the individual electrolyte and interconnect layers respectively;

Figure 4 is a sectional view taken along the line 4-4 of Figures 3A and 3B;

Figure 5 is a sectional view taken along the line 5-5 of Figures 3A and 3B;

Figure 6 is a sectional view taken along the line 6-6 of Figures 3A and 3B;

Figure 7 is a perspective view, partially broken away of the fuel cell of the present invention incorporating fluids in parallel flow, and in which the outlet manifold has been removed;

Figure 8 is a perspective view, partially broken away from the fuel cell of the present invention in which the inlet and outlet manifold conduits for the oxidant have been removed; and

Figure 9 is a diagrammatic flow chart of the steps required to form a fuel cell of the present invention.

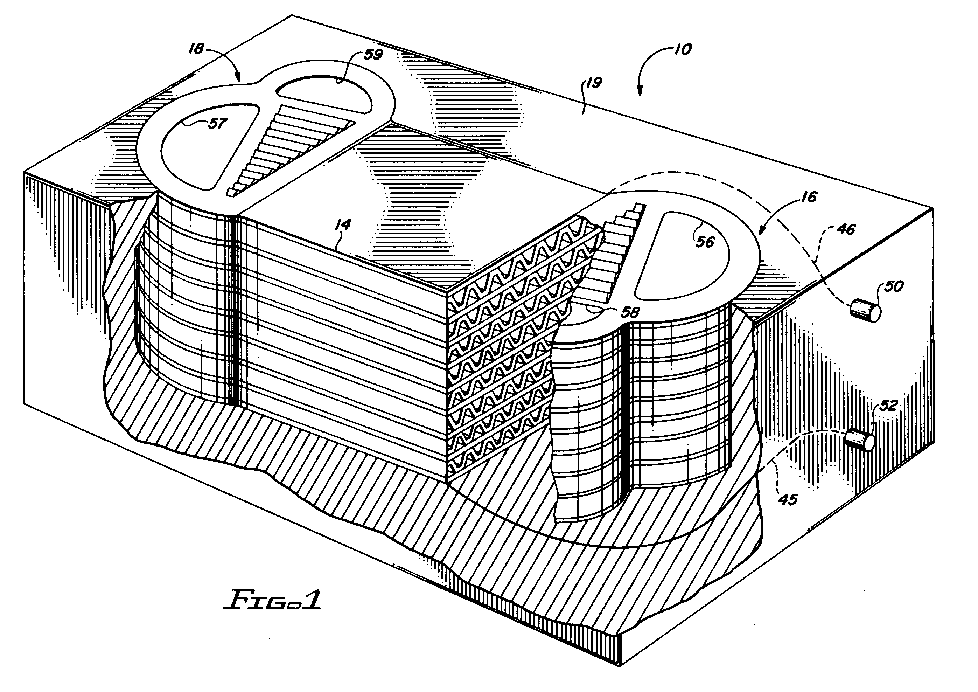

Figure 1 shows a monolithic solid oxide full cell 10 of the present invention including a fuel cell core 14 and inlet and outlet manifolding, 16 and 18, at each end of the core 14. The core and manifolds are located within and surrounded by suitable insulation 19. Supply lines connected to suitable fuel and oxidant sources are not shown.

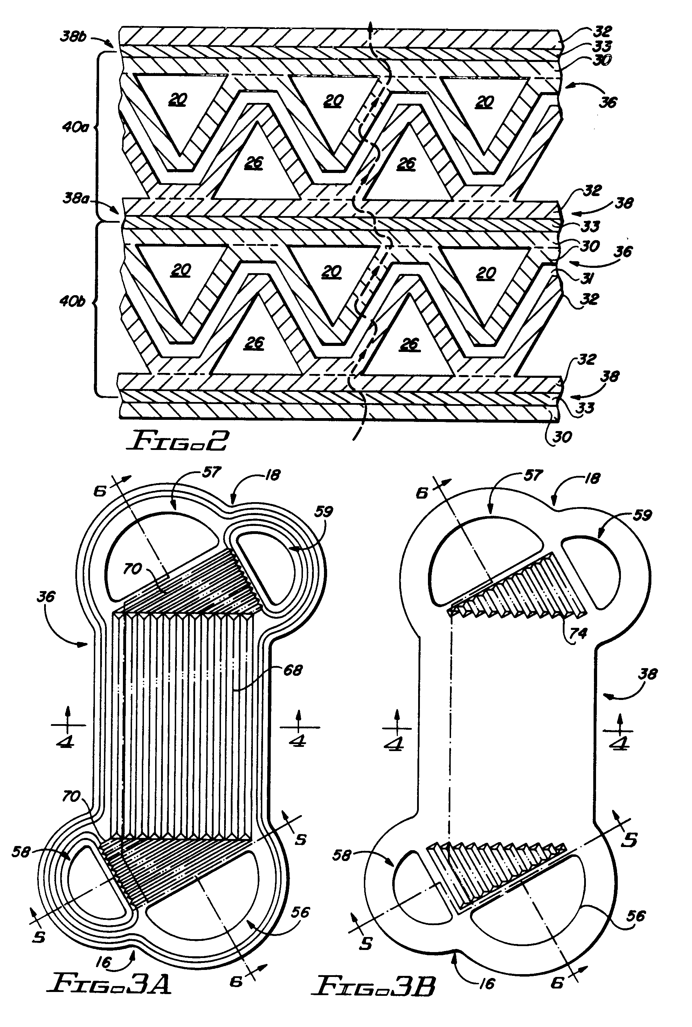

Figure 2 is an enlarged cross-section of the core 14 for the fuel cell 10 of Figure 1. Within the core 14 a plurality of fuel passageways 20 and oxidant passageways 26 are formed which are disposed parallel to one another and alternately adjacent one another. The passageways 20 for the fuel are formed with only an anode material 30 defining the exposed passageway wall. The passageways 26 for the oxidant are formed with only a cathode material 32 defining the exposed passageway walls. Adjacent cell passageways 20 and 26 are separated by either an electrolyte wall 36 or by an interconnect wall 38. The electrolyte wall portion 36 comprises a thin trilayer of electrolyte material 31 between the anode material 30 and the cathode material 32. The interconnect wall 38 comprises a thin trilayer of interconnect material 33 between the anode and cathode materials 30 and 32. Two interconnect walls 38 can define the limit of one "cell" unit 40, however, in the overall fuel cell 10, two adjacent cell units 40 share an interconnect wall 38.

The anode, cathode, electrolyte and interconnect materials are selected and modified to comply with the following requirements: (1) the electrically conductive aspects of the cathode, anode, and interconnect; (2) the ionic transport and electronic isolation aspects of the electrolyte; and (3) the gas porosity properties of the cathode and anode and the gas imperviousness of the electrolyte and interconnect. Likewise the structural integrity, thermal expansion and contraction ratios, and chemical compositions of the composite monolithic core are designed for the specific operational parameters of temperature, pressure, gas flow rates, voltage, and current densities necessary to provide optimum efficiency.

In a preferred embodiment of the invention, the interconnect and the electrolyte layers are thin (0.002-0.005cm) while the sandwiching cathode and anode layers are perhaps the same thickness or possibly up to perhaps ten times this thickness (0.002-0.05cm).

The monolithic core provides increased power density due to the increased active exposure areas of fuel and oxidant per corresponding unit flow path volume, and due further to having only active materials (the anode, cathode, electrolyte, and interconnect) in the core. The fuel and oxidant passageways 20 and 26 of the core 14 can be very small, and likewise the core walls can be thin yet self supporting over the small distances across the defined passageways, making shorter current paths and reduced resistance losses possible and minimising diffusion losses by eliminating thick support tubes entirely.

The manifolds, 16 and 18 each include an oxidant passageway 48,49 and a fuel passageway 56,57 and a turning section generally designated by the numeral 24. The turning section 24 defines a plurality of fuel manifold passages 62 and a plurality of oxidant manifold passages 64 as will be described later.

It is envisioned that the fuel cell of the present invention can be used with either parallel flow or counter flow of the two working fluids. Therefore, for the purpose of clarity, it will be assumed that a parallel flow system is being used and so the manifold 16 will be referred to as the inlet manifold defining a fuel inlet conduit 56 and an oxidant inlet conduit 58 and the manifold 18 will be referred to as the outlet manifold defining a fuel outlet conduit 57 and an oxidant outlet conduit 59. Each manifold further includes the turning section 24.

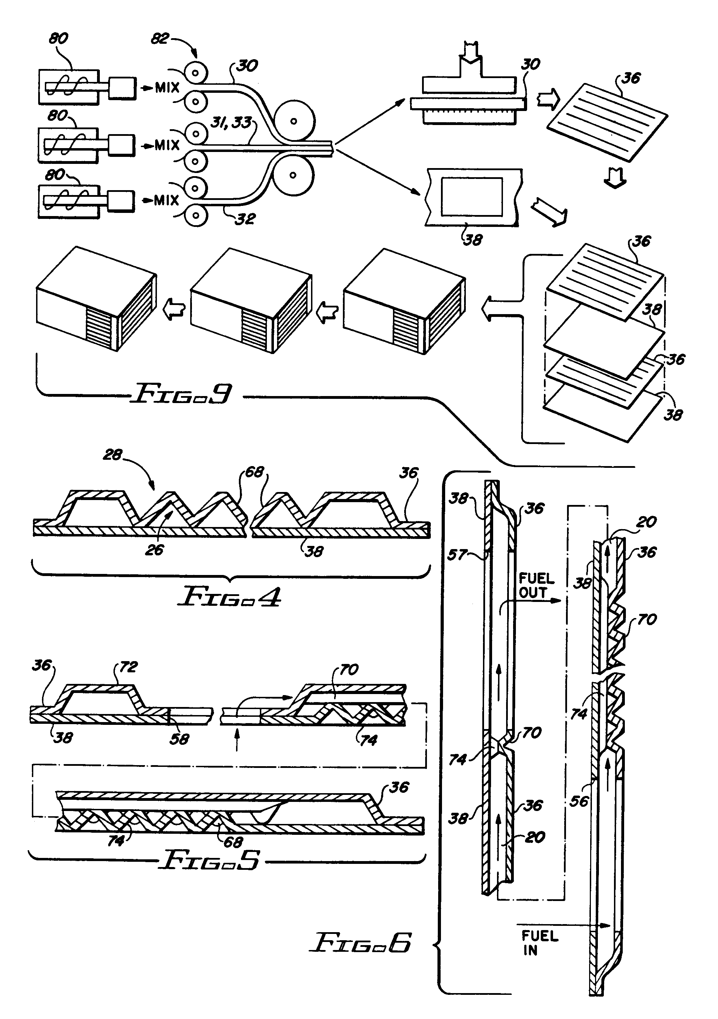

Gaseous fuel is conveyed from a source (not shown) to the fuel inlet conduit 56 (Figures 1 and 3) formed within the inlet manifold 16 for flow through the fuel manifold passageways 62 and then through the passageways 20 in the core 14 towards the fuel outlet conduit 57 formed within the outlet manifold 18. Likewise, oxidant is carried from a source (not shown) to the oxidant inlet conduit 58 formed within the inlet manifold 16 for flow through the oxidant manifold passageways 64 and in turn for flow axially through the oxidant passageways 26 towards the oxidant outlet conduit 59 formed within the outlet manifold 18. The fuel and oxidant react electrochemically across the electrolyte walls 36 separating the fuel and oxidant in the core 14. Fuel and oxidant not consumed in the core is discharged through the outlet manifold 18 and subsequently may be combusted with the other reaction products from the fuel cell 10 in an appropriate combustion chamber.

As can best be seen in Figure 2, each electrolyte wall 36 is comprised of the layer of electrolyte 31 sandwiched between the layer of anode 30 and the cathode 32. The electrolyte wall 36 electrochemically reacts the fuel and oxidant being conveyed in the passageways 20 and 26, respectively, to develop an electrical potential across the electrolyte wall 36. Furthermore, for all of the electrolyte walls thus confined between any pair of adjacent interconnect walls (38a and 38b, for example), there is an in-series electrical hook up of these cell unites (40a, 40b, for example). The electrolyte walls 36 are alternated or backfolded in effect between the interconnect walls 38 so that the fuel and oxidant passageways 20 and 26 are likewise alternately disposed between any pair of adjacent interconnect walls.

As will be appreciated, the cathode 32 and anode 30 layers of the of the electrolyte walls 36 are porous to the degree required to allow the fuel and oxidant gases confined on opposite sides to be transported to the electrode/electrolyte interface, while the electrolyte material 31 and the interconnect material 33 in the electrolyte and interconnect walls are impervious and serve to isolate the fuel and oxidant gases completely from one another. The electrolyte material 31 is electrically not conductive, so that electrons do not pass between the cathode and anode layers formed on opposite sides of the electrolyte, but the electrolyte material 31 does provide ionic conductivity for oxygen ion transfer between the cathode and anode. Both cathode and anode layers, 32 and 30, are electrically conductive. The interconnect material 33 allows electrons to pass through it, thereby electrically connecting the anode material 30 and cathode material 32 of the cells on opposite sides of the electrolyte wall 36 together to provide a series connection of adjacent cells.

In a practical fuel cell of the type shown in Figures 1 and 2, many serially connected cells 40a, 40b, etc. will be provided, exceeding perhaps even two hundred. The outermost interconnect walls or the series connections between interconnect walls are connected electrically via conductors 45 and 46 to external terminals 50 and 52 of the fuel cell to provide a cumulative electrical output at the terminals (illustrated schematically in Figure 1) the conductors 45 and 46 may be connected to the lowermost anode or overlying interconnect material 33, and the uppermost cathode or interconnect material. In this manner, the overall fuel cell voltage at the exterior terminals 50 and 52 might be of the order of between 10 and 100 volts. As the conductor 45, 46 will typically be formed of a high temperature conductive metal, it will be advantageous to have the conductors in a fuel environment (rather than an oxidising environment) or to bleed a small amount of fuel over the conductors so as to minimise their oxidation.

Shown in Figures 3 to 6 is the manifolding system to be used in association with the fuel cell core 14. The inlet manifold 16 and the outlet manifold 18 are similar to each other in their ducting of the fuel and oxidant flows. Each defines oxidant inlet and outlet conduits 58 and 59, and fuel inlet and outlet conduits 56 and 57 for connection to suitable and fuel sources. As will be described below the manifolding 16 and 18 and the fuel cell core 14 can be formed as an integral piece.

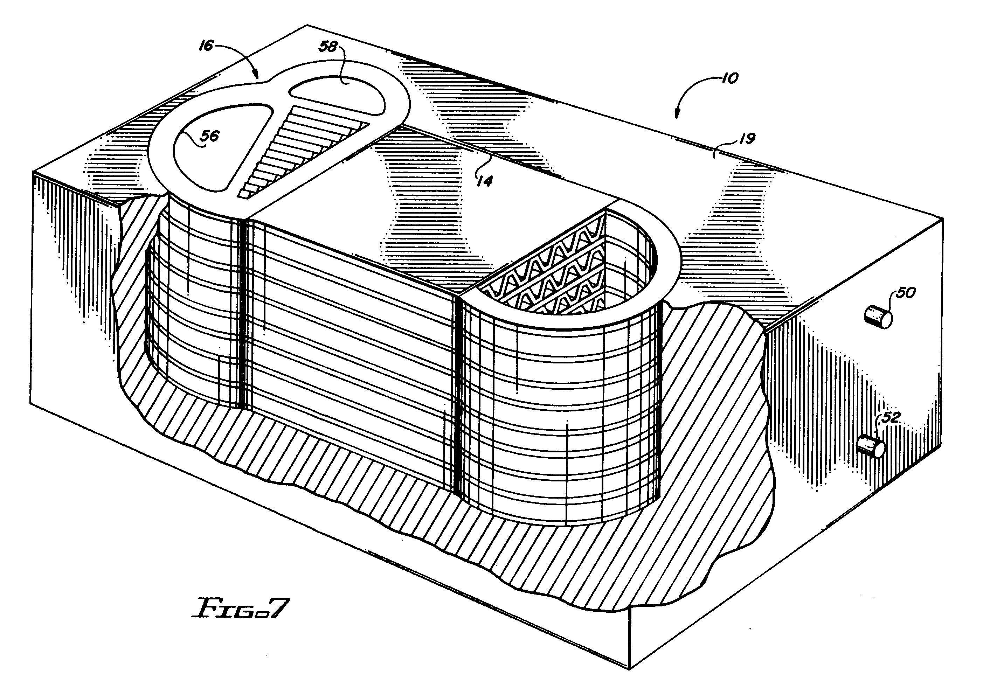

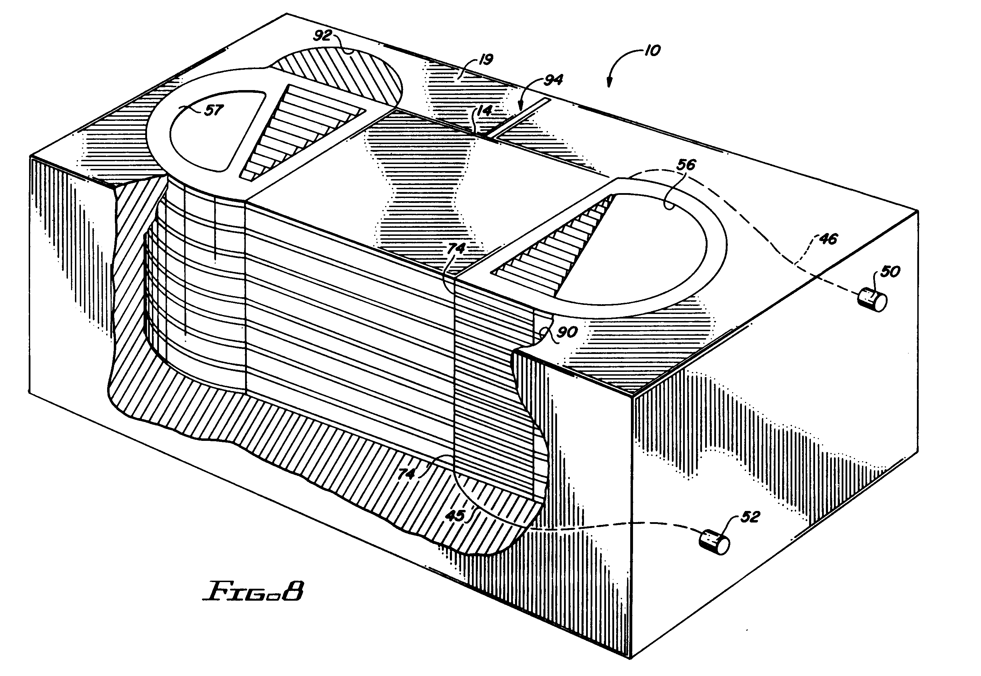

Figures 3A and 3B show fuel cell core walls having integral inlet and outlet manifolds 16 and 18. Figure 3A shows the electrolyte wall 36 and Figure 3B shows the interconnect wall 38. Shown in Figure 3A are electrolyte wall impressions or corrugations 68 formed between the manifolds 16 and 18, and which, when alternately stacked with the interconnect walls 38, form the fuel and oxidant passageways. At each end of the electrolyte wall corrugations 68 there are a plurality of manifold corrugations 70 which extend parallel to each other and to the manifold corrugations at the opposite end of the fuel and oxidant passageways. Each manifold corrugation 70 has a height less than the height of the passageways 20 and 26 (see Figure 5). The inlet and outlet fuel manifold passageways 62 extend from the end of the fuel cell core fuel passageways 20 to the fuel inlet and outlet conduits 56 and 57 formed internally to the inlet and outlet manifolds 16 and 18. Likewise, the inlet and outlet oxidant manifold passageways 64 extend from the ends of the core oxidant passageways 26 to the oxidant inlet and outlet conduits 58 and 59 formed within the manifolds 16 and 18.

Figure 4 taken along the lines 4-4 of Figures 3A and 3B details the cross-section of one interconnect wall 38 placed beneath an electrolyte wall 36. The plurality of oxidant passages 26 are clearly defined by the two walls while the plurality of fuel passages 20 require a second interconnect wall 38 in order to define the upper boundary of the fuel passages 20.

Figure 5 shows the manifolding of the present invention. As shown, the electrolyte wall 36 is placed atop the interconnect wall 38 and is cross-sectioned as shown by lines 5-5 in Figures 3A and 3B. The interconnect wall 38 is generally flat except for the manifold corrugations 74 which form the inlet and outlet oxidant manifolding passages 64. The electrolyte wall 36 cross-section shows that it is crimped to form a channel 72, is then open to define the oxygen inlet conduit 58 before it is raised to the same height as the channel 72. The corrugations 70 are shown to descend to some fraction of this height, in this case, approximately one half of this height. The fuel cell core corrugations 68 can also be seen in this view.

As best seen in Figure 5, each electrolyte wall includes the hollow channel 72 which extends around the wall a short distance from the perimeter. The height of the channel 72 rises to the height of the corrugations 70 which form the oxidant manifold passageways 64. In this manner, the generally flat interconnect wall 38 lays atop the channel 72 and the corrugations 70.

The trilayer interconnect wall 38 is generally flat and includes the interconnect wall manifold corrugations 74 which define the inlet and the outlet fuel manifold passageways 62. The corrugations 74 are generally perpendicular to the oxidant manifold passageways 64 when they are laid on top of one another. The corrugations 74 extend upwards approximately one-half the height of the channel 72 of the electrolyte wall 36 from the generally flat surface of the interconnect wall 38.

Figure 6 shows the cross-sectional view along the line 6-6 of Figure 3. The interconnect wall 38 is shown open near each end to define the fuel inlet and outlet conduits 56 and 57. Immediately downstream of the opening defining the fuel inlet conduit 56 are the electrolyte wall manifold corrugations to and the interconnect wall manifold corrugations 74 which have a height of approximately one half of the height of the electrolyte wall 36. Thereafter, a fuel passageway 20 is shown extending the length of the core. The fuel in the passageway 20 then encounters the electrolyte wall manifold corrugations 70 and the interconnect wall manifold corrugations 74 which form one boundary of the fuel manifold passageways 62. The fuel then enters the fuel outlet conduit 57 formed integral with the electrolyte and interconnect walls for passage out of the fuel cell.

As stated above, the discussion of the flow of the fuel and oxidant has been directed to a parallel flow system. When using a parallel flow system, it is envisioned that the outlet manifold 18 can be entirely eliminated or replaced by a manifold in which the fuel and oxidant are ducted together (see Figure 7). In this manner the fuel and oxidant are mixed for combustion immediately upon leaving the core. In another embodiment, either the fuel inlet and outlet conduits 56,57 or the oxidant inlet and outlet conduits 58,59 can be eliminated (see Figure 8). In this embodiment, one fluid can be introduced into the fuel cell at an opening 90 formed in the insulation 19 at one end and can be removed from a second opening 92 at the other end. It is important that there is some barrier 94 placed between the two openings 90 and 92 to prevent the fluid at the inlet end mixing with the fluid at the outlet end. In yet another embodiment (not shown) of the parallel flow type, the outlet manifold 18 can be eliminated and either the fuel or oxidant conduit can be eliminated at the inlet end. This embodiment is a combination of the embodiments of Figure 7 and 8. If the fluids are in a counter flow reaction then one could use the same manifolding system as that shown in Figure 8.

Figure 9 is a schematic diagram of a process to manufacture a fuel cell of the present invention. Powders for each of the materials -- strontium lanthanum manganite for the cathode, yttria-stabilised zirconia for the electrolyte, magnesium-doped lanthanum chromite for the interconnect and a cermet of cobalt or nickel metal with stabilised zirconia for the anode --are first prepared so that the particle size ranges from 1 micron to 10 microns. The powders are then each mixed with the desired binder and plasticiser in high intensity mixers 80. For example, to form the electrolyte material, zirconia and yttria are mixed in approximate percentages of 87 to 13 by weight. The binder and plasticiser make up approximately 10 to 40% by weight of the total mix and preferably approximately 18%, the amounts of binder and plasticiser being approximately equal. Porosity may be controlled by using larger sized particles, or by the use of a higher percentage of binder.

Typically, the binder used can be selected from the group comprising: synthetic rubber, thermosetting plastics, polyvinyl alcohol or polymer systems which thermally decompose without cross-linking. The plasticiser chosen is one that is pliable, elastic and allows low temperature forming of the binder system, e.g. butyl benzol thalate, solvents of the thalate group.

The powder, binder and plasticiser are combined in a high intensity mixer at room temperature. The mixing disperses the power particles and coats each particle with binder. The mixing action also raises the temperature through friction to 300°F (149°C) and softens the plasticiser. Typically, the time for mixing can be 0.5 to 10 minutes with 2 minutes generally being sufficient.

The mixed material is removed from the mixer and rolled, preferably immediately after mixing to retain the heat generated by the mixing. As shown, the rolling step is carried out by a roll mill 82. Each roller is generally heated to approximately 50 - 300°F (10 to 149°C) depending on the desired thickness to assist in the rolling operation. Each material (anode, cathode, electrolyte and interconnect) material is roll milled into a tape 30, 31, 32 and 33 of the desired thickness. It should be noted that the numerals 30, 31 32, and 33 designate the material as well as a tape or layer formed of that material. Thereafter, a multilayer tape 36 or 38 is roll-milled from at least three of the other tapes, i.e. 30, 31 or 32 and 33. During this step each tape is friction bonded to the adjacent tape(s). It is important that no voids are formed between the tape layers during this rolling step. The resulting multilayer tape may be further calendered if required to reduce its thickness. Furthermore, it is envisioned that each multilayer tape can be formed of more than three layers of tape, if required, to increase core efficiency.

In order to increase the efficiency of the fuel cell it is advantageous, but not necessary, to corrugate the electrolyte tape to achieve greater surface area. This can be accomplished by compression moulding, vacuum forming or by gear forming. It is important not to get any material flow during corrugation, thereby retaining the desired layer thickness.

Before stacking, the fuel cell core in its green state is solution treated with any solvent (e.g. alcohol) which will assist in dissolving the binder. Once the multilayer tapes are cut to size and the electrolyte tape has been subjected to the desired forming process, the individual layers are alternately stacked to form the fuel cell core 14. Binder extraction is done in a non-reactive air or vacuum furnace by uniformly heating the core slowly up to approximately 1000°F (538°C), depending on the binder used, so that the binder changes into a gaseous phase. The heat-up rate is important in that it must be slow enough not cause blistering or the formation of gas pockets between the multilayered tapes. Binder extraction removes all but a small amount of residues (approximately 1% by weight of the total binder) and results in approximately 0-10% shrinkage.

After the binder has been removed, the core 14 can either be air cooled or be placed within the sintering furnace.

Sintering is a rapid fire process which results in a densification of the core materials. During sintering the furnace is heated to approximately 1200-1600°F (649-871°C) whereupon the ceramic particles which are in proximity to one another are bonded together to form a rigid fuel cell core 14. The interconnect and electrolyte materials undergo a 94% densification which forms a gas tight barrier. The anode and cathode materials have a 20% to 50% porosity after sintering. The more porous, the more continuous an electric flow between the two gases.

**Claims**

1. A solid electrolyte fuel cell (10) for electronically combining a fuel and an oxidant for the generation of a galvanic output comprising: a core (14) defining a series of fuel passageways (20) and a series of oxidant passageways (26); means (56,59) for directing the fuel and oxidant for flow through the respective fuel and oxidant passageways; and electrical conductors (45,46,50,52) for directing the galvanic output from the fuel cell to an exterior circuit; in which the core comprises a series of electrolyte walls (36) separated by a series of interconnect walls (38), each electrolyte wall (36) comprising a layer of electrolyte material (31) sandwiched between a layer of electrically conductive cathode material (32) on one side and a layer of electrically conductive anode material (30) on the other side, each interconnect wall (38) comprising a layer of an electrically conductive interconnect material (33) sandwiched between and electrically connecting a layer of cathode material (32) on one side and a layer of anode material (30) on the other side; the electrolyte and interconnect walls (36,38) being alternatively stacked to define the plurality of fuel and oxidant passageways (20,26) where the fuel passageways (20) are defined only by the anode material (30) and the oxidant passageways are defined only by the cathode material (32); the core (14) being substantially devoid of any composite inert material and being monolithic; characterised in that the means for directing the fuel and oxidant includes a manifold section (16) at one end of the core (14), the manifold section (16) including: an inlet manifold conduit (56) for one of the fuel and the oxidant and a turning section (24) located between the core (14) and the manifold conduit (56); the turning section (24) including fuel manifold passageways (62) and oxidant manifold passageways (64) defined by the alternately stacked electrolyte and interconnect walls (36,38); the fuel manifold passageways (62) being arranged to overlap and to be relatively inclined with respect to the oxidant manifold passageways (64); the manifold passageways (62,64) respectively having heights which are a fraction of the height of the fuel and oxidant passageways (20,26) in the core (14), whereby the manifold passageways (62,64) communicate with their respective core passageways (20,26) and the inlet manifold conduit (56) is connected by the appropriate one of the manifold passageways (62) to its core passageway (20).

2. A fuel cell as claimed in Claim 1, characterised in that the manifold section (16) includes a second manifold conduit (58) for the other of the fuel and the oxidant which is similarly connected by the appropriate one of the manifold passageways (64) to its core passageway (26).

3. A fuel cell as claimed in Claim 2, characterised in that the two manifold conduits (56,58) constitute a fuel inlet manifold conduit and an oxidant inlet manifold conduit.

4. A fuel cell as claimed in any preceding Claim, characterised by a second manifold (16) section at the other end of the core, preferably including fuel and oxidant outlet manifold conduits (57,59).

5. A fuel cell as claimed in any preceding Claim, characterised in that the core passageways (20,26) are formed by corrugations (68) in the electrolyte wall.

6. A fuel cell as claimed in any preceding Claim, characterised in that the manifold passageways (62,64) are formed by corrugations (70,74) in the electrolyte wall (36) and the interconnect wall (38).

7. A fuel cell as claimed in any of Claims 4 to 6, characterised in that each interconnect wall (38) comprises a generally flat central core section and a manifold section at each end of the core section, each manifold section including two manifold openings defining the fuel and oxidant manifold conduits (56,57,58,59), the manifold sections also including manifold corrugations (74) extending between and connecting one of the manifold openings and the core section.

8. A fuel cell as claimed in any of Claims 4 to 6, characterised in that each electrolyte wall (36) comprises a generally central core section having electrolyte wall core section corrugations (68) extending from end of the core section to the other and an electrolyte wall manifold section at each end of the core section, each electrolyte wall manifold section including two manifold openings defining the fuel and oxidant manifold conduits (56,57,58,59), the core sections also including oxidant manifold corrugations (70) extending from the end of the electrolyte wall core section corrugations to one of the openings.

9. A method of constructing a monolithic fuel cell core made up from electrolyte and interconnect walls (36,38) which comprises: mixing anode, cathode, electrolyte and interconnect powders separately with a binder and a plasticiser to form four separate batches of an anode, a cathode, an electrode and an interconnect material; forming a tape of each material with a desired width and thickness; forming two flexible trilayer tapes of desired thickness, one trilayer tape comprising a layer of electrode material sandwiched between an anode and a cathode tape and the other trilayer tape comprising an interconnect tape sandwiched between an anode tape and a cathode tape; cutting the two trilayer tapes to length; moulding one or both trilayer tapes to the desired shape; alternatively stacking the trilayer tapes to form the fuel cell core; extracting the binder from each tape; and sintering the core to form a monolithic structure; characterised in that the forming steps are performed by roll milling the material.

10. A method as claimed in Claim 9, characterised in that the mixing step is carried out in a high intensity mixer (80).

11. A method as claimed in Claim 9 or Claim 10, characterised in that the moulding step is performed by compressor moulding or by vacuum forming the cut tapes.

**Revendications**

1. Pile à combustible à électrolyte solide (10) pour combiner électroniquement un combustible et un oxydant pour la production d'une sortie galvanique comprenant : un noyau (14) définissant une série de passages (20) pour le combustible et une série de passages (26) pour l'oxydant; un moyen (56, 59) pour diriger le combustible et l'oxydant de façon qu'ils passent par les passages respectifs pour combustible et oxydant; et des conducteurs électriques (45, 46, 50, 52) pour diriger la sortie galvanique de la pile à combustible vers un circuit extérieur; dans laquelle le noyau comprend une série de parois d'électrolyte (36) séparées par une série de parois d'interconnexion (38), chaque paroi d'électrolyte (36) comportant une couche de matière d'électrolyte (31) placée entre une couche d'une matière de cathode conductrice de l'électricité (32) d'un côté et une couche d'une matière d'anode conductrice de l'électricité (30) de l'autre côté, chaque paroi d'interconnexion (38) comportant une couche d'une matière d' interconnexion conductrice de l'électricité (33) placée entre, en les connectant électriquement, une couche de la matière de cathode (32) d'un côté et une couche de la matière d'anode (30) de l'autre côté; les parois d'électrolyte et d'interconnexion (36, 38) étant empilées en alternance afin de définir la multitude de passages (20, 26) pour le combustible et l'oxydant, où les passages (20) pour le combustible sont définis seulement par la matière de l'anode (30) et les passages pour l'oxydant sont définis seulement par la matière de la cathode (32); le noyau (14) étant sensiblement exempt de toute matière inerte composite et étant monolithique, caractérisée en ce que le moyen pour diriger le combustible et l'oxydant comprend une section à distributeur (16) à une extrémité du noyau (14), la section à distributeur (16) comportant: un conduit de distributeur d'entrée (56) pour le combustible ou l'oxydant et une section en coude (24) située entre le noyau (14) et le conduit (56) du distributeur; la section en coude (24) comportant des passages (62) du distributeur de combustible et des passages (64) du distributeur de l'oxydant définis par les parois empilées en alternance d'électrolyte et d'interconnexion (36, 38), les passages (62) du distributeur de combustible étant disposés de manière à chevaucher et à être relativement inclinés par rapport aux passages (64) du distributeur d'oxydant; les passages (62, 64) des distributeurs ayant respectivement des hauteurs qui sont une fraction de la hauteur des passages (20, 26) pour le combustible et l'oxydant dans le noyau (14), d'où il résulte que les passages (62, 64) des distributeurs communiquent avec leurs passages respectifs (20, 26) du noyau et le conduit (56) du distributeur d'entrée est relié par le passage approprié (62) du distributeur à son passage (20) du noyau.

2. Pile à combustible selon la revendication 1, caractérisée en ce que la section à distributeur (16) comprend un second conduit (58) de distributeur pour l'autre du combustible ou de l'oxydant qui est relié de façon similaire par le passage approprié des passages (64) du distributeur à son passage (26) du noyau.

3. Pile à combustible selon la revendication 2, caractérisée en ce que les deux conduits (56, 58) des distributeurs constituent un conduit de distributeur d'entrée de combustible et un conduit de distributeur d'entrée d'oxydant.

4. Pile à combustible selon l'une quelconque des revendications précédentes, caractérisée par une seconde section à distributeur (16) à l'autre extrémité du noyau, comportant de préférence des conduits (57, 59) du distributeur de sortie du combustible et de l'oxydant.

5. Pile à combustible selon l'une quelconque des revendications précédentes, caractérisée en ce que les passages (20, 26) sont formés par des ondulations (68) dans la paroi d'électrolyte.

6. Pile à combustible selon l'une quelconque des revendications précédentes, caractérisée en ce que les passages (62, 64) des distributeurs sont formés par des ondulations (70, 74) dans la paroi d'électrolyte (36) et dans la paroi d'interconnexion (38).

7. Pile à combustible selon l'une quelconque des revendications 4 à 6, caractérisée en ce que chaque paroi d'interconnexion (38) comprend une section à noyau central généralement plat et une section à distributeur à chaque extrémité de la section à noyau, chaque section à distributeur comportant deux ouvertures de distributeur qui définissent les conduits (56, 57, 58, 59) des distributeurs de combustible et d'oxydant, les sections à distributeur comportant aussi des ondulations de distributeur (74) qui s'étendent entre les ouvertures des distributeurs et la section à noyau et les interconnectent.

8. Pile à combustible selon l'une quelconque des revendications 4 à 6, caractérisée en ce que chaque paroi d'électrolyte (36) comprend une section à noyau généralement central ayant des ondulations (68) de section à noyau et paroi d'électrolyte s'étendant entre une extrémité de la section à noyau et l'autre et une section à distributeur de paroi d'électrolyte à chaque extrémité de la section à noyau, chaque section à distributeur de paroi d'électrolyte comportant deux ouvertures de distributeur définissant des conduits (56, 57, 58, 59) de distributeurs de combustible et d'oxydant, les sections à noyau comprenant aussi des ondulations (70) de distributeur d'oxydant qui s'étendent entre l'extrémité des ondulations de la section à noyau de la paroi d'électrolyte et l'une des ouvertures.

9. Procédé de construction d'un noyau de pile à combustible monolithique constitué de parois d'électrolyte et d'interconnexion (36, 38) qui comprend: le mélange de poudres d'anode, de cathode, d'électrolyte et d'interconnexion séparément avec un liant et un plastifiant afin de former quatre lots séparés d'une matière d'anode, d'une matière de cathode, d'une matière d'électrode et d'une matière d'interconnexion; la formation d'une bande de chaque matière avec une épaisseur et une largeur désirées; la formation de deux bandes flexibles à trois couches d'épaisseur désirée, une bande à trois couches comportant une couche de matière d'électrode placée entre une bande d'anode et une bande de cathode et l'autre bande à trois couches comprenant une bande d'interconnexion placée entre une bande d'anode et une bande de cathode; la coupe à longueur des deux bandes à trois couches; le moulage d'une ou de deux bandes à trois couches à la forme désirée; l'empilage alterné des bandes à trois couches afin de former le noyau de la pile à combustible; l'extraction du liant de chaque bande; et le frittage du noyau afin de former une structure monolithique; caractérisé en ce que les étapes de formation sont exécutées par laminage de la matière.

10. Procédé selon la revendication 9, caractérisé en ce que l'étape de mélange est exécutée dans un mélangeur de haute intensité (80).

11. Procédé selon la revendication 9 ou la revendication 10, caractérisé en ce que l'étape de moulage est exécutée par un moulage sous compression ou par formation sous vide des bandes découpées.

**Patentansprüche**

1. Feststoffelektrolyt-Brennstoffzelle (10) zur elektrischen Kombination eines Brennstoffs und eines Oxidationsmittels zur Erzeugung eines galvanischen Ausgangssignals, bestehend aus einem Kern (14), der eine Reihe von Brennstoffkanälen (20) und eine Reihe von Oxidationsmittelkanälen (26) begrenzt, einer Einrichtung (56, 59), um den Brennstoff und das Oxidationsmittel durch die jeweiligen Brennstoff- und Oxidationsmittelkanäle strömen zu lassen, und elektrischen Leitern (45, 46, 50, 52), um das galvanische Ausgangssignal von der Brennstoffzelle zu einer externen Schaltung zu leiten, wobei der Kern eine Reihe von Elektrolytwänden (36) aufweist, die durch eine Reihe von Verbindungswänden (38) getrennt sind, jede Elektrolytewand (36) eine Schicht eines Elektrolytmaterials (31) aufweist, die zwischen einer Schicht eines elektrisch leitenden Kathodenmaterials (32) auf einer Seite und einer Schicht eines elektrisch leitenden Anodenmaterials (30) auf der anderen Seite angeordnet ist, jede Verbindungswand (38) eine Schicht eines elektrisch leitenden Verbindungsmaterials (33) aufweist, das zwischen einer Schicht eines Kathodenmaterials (32) auf der einen Seite und einer Schicht eines Anodenmaterials (30) auf der anderen Seite angeordnet ist und diese elektrisch verbindet, der Elektrolyt und die Verbindungswände (36, 38) abwechselnd gestapelt sind, um die Brennstoff- und Oxidationsmittelkanäle (20, 26) zu bilden, und wobei die Brennstoffkanäle (20) nur durch das Anodenmaterial (30) und die Oxidationsmittelkanäle nur durch das Kathodenmaterial (32) gebildet sind, und der Kern (14) von jedem zusammengesetzten inerten Material im wesentlichen frei und monolithisch ausgebildet ist, **dadurch gekennzeichnet,** daß die Einrichtung, um den Brennstoff und das Oxidationsmittel strömen zu lassen, einen Verteilerrohrabschnitt (16) am einen Ende des Kerns (14) aufweist, der eine Einlaßverteilerrohrleitung (56) für den Brennstoff bzw. das Oxidationsmittel und einen Umlenkabschnitt (24) zwischen dem Kern (14) und der Verteilerrohrleitung (56) hat, wobei der Umlenkabschnitt (24) Brennstoff-Verteilerrohrkanäle (62) und Oxidationsmittel-Verteilerrohrkanäle (64) aufweist, die von den abwechselnd gestapelten Elektrolyt- und Verbindungswänden (36, 38) begrenzt werden, daß die Brennstoff-Verteilerrohrkanäle (62) so ausgebildet sind, daß sie einander überlappen und relativ zu den Oxidantionsmittel-Verteilerrohrkanälen (64) geneigt sind, daß die Verteilerrohrkanäle (62, 64) jeweils eine Höhe haben, die ein Bruchteil der Höhe der Brennstoff- und Oxidationsmitel-Kanäle (20, 26) im Kern (14) sind, daß die Verteilerrohrkanäle (62, 64) mit ihren jeweiligen Kernkanälen (20, 26) in Verbindung stehen, und daß die Einlaßverteilerrohrleitung (56) durch den zugehörigen Verteilerrohrkanal 862) mit ihrem Kernkanal (20) verbunden ist.

2.   Brennstoffzelle nach Anspruch 1, **dadurch gekennzeichnet,** daß der Verteilerrohrabschnitt (16) eine zweite Verteilerrohrleitung (58) für das Oxidationsmittel bzw. den Brennstoff aufweist, die in gleicher Weise durch den zugehörigen Verteilerrohrkanal (64) mit ihrem Kernkanal 826) verbunden ist.

3.   Brennstoffzelle nach Anspruch 2, **dadurch gekennzeichnet,** daß die beiden Verteilerrohrleitungen (56, 58) eine Brennstoff-Einlaßverteilerrohrleitung und eine Oxidations-Einlaßverteilerrohrleitung bilden.

4.   Brennstoffzelle nach einem der vorhergehenden Ansprüche, **gekennzeichnet durch** einen zweiten Verteilerrohrabschnitt (16) am anderen Ende des Kerns, der vorzugsweise Brennstoff- und Oxidationsmittel-Auslaßverteilerrohrleitungen (57, 59) aufweist.

5.   Brennstoffzelle nach einem der vorhergehenden Ansprüche, **dadurch gekennzeichnet,** daß die Kernkanäle (20, 26) durch Wellenbildungen (68) in der Elektrolytwand geformt sind.

6.   Brennstoffzelle nach einem der vorhergehenden Ansprüche, **dadurch gekennzeichnet,** daß die Verteilerrohrkanäle (62, 64) durch Wellenbildungen (70, 74) in der Elektrolytwand (36) und in der Verbindungswand (38) geformt sind.

7.   Brennstoffzelle nach einem der Ansprüche 4 bis 6, **dadurch gekennzeichnet,** daß jede Verbindungswand (38) aus einem in etwa flachen zentralen Kernabschnitt und einem Verteilerrohrabschnitt an jedem Ende des Kernabschnitts besteht, wobei jeder Verteilerrohrabschnitt zwei Verteilerrohröffnungen aufweist, die die Brennstoff- und Oxidationsmittel-Verteilerrohrleitungen (56, 57, 58,59) begrenzen, und die Verteilerrohrabschnitte auch die Verteilerrohr-Wellenbildungen (74) aufweisen, die sich zwischen einer der Verteilerrohröffnungen und dem Kernabschnitt erstrecken und diese verbinden.

8.   Brennstoffzelle nach einem der Ansprüche 4 bis 6, **dadurch gekennzeichnet,** daß jede Elektrolytwand (36) einen in etwa zentralen Kernabschnitt mit Elektrolytwand-Kernabschnitts-Wellenbildungen (68) aufweist, die sich vom einen Ende des Kernabschnitts zum anderen erstrecken, sowie einen Elektrolytwand-Verteilerrohrabschnitt an jedem Ende des Kernabschnitts, wobei jeder Elektrolytwand-Verteilerrohrabschnitt zwei Verteilerrohröffnungen aufweist, die die Brennstoff- und Oxidationsmittel-Verteilerrohrleitungen (56, 57, 58, 59) begrenzen, und die Kernabschnitte auch Oxidationsmittel-Verteilerrohr-Wellenbildungen (70) aufweisen, die sich vom Ende der Elektrolytwand-Kernabschnitt-Wellenbildungen zu einer der Offnungen erstrecken.

9.   Verfahren zum Aufbau eines monolithischen Brennstoffzellenkerns, der sich aus einem Elektrolyt und Verbindungswänden (36, 38) zusammensetzt, bei dem Anoden-, Kathoden-, Elektolyt- und Verbindungspulver getrennt mit einem Bindemittel und einem Weichmacher gemischt werden, um vier getrennte Chargen eines Anoden-, Kathoden-, Elektroden- und Verbindugnsmaterials zu bilden, ein Band aus jedem Material mit einer bestimmten Breite und Dicke gebildet wird, zwei flexible dreischichtige Bänder bestimmter Dicke gebildet werden, von denen das eine dreischichtige Band eine Schicht eines Elektrodenmaterials aufweist, das zwischen einem Anoden- und einem Kathodenband angeordnet ist, und das andere dreischichtige Band ein Verbindungsband aufweist, das zwischen einem Anodenband und einem Kathodenband angeordnet ist, die beiden dreischichtigen Bänder auf Länge geschnitten werden, eines oder beide dreischichten Bänder in die gewünschte Form gebracht werden, alternativ die dreischichtigen Bänder gestapelt werden, um den Brennstoffzellenkern zu bilden, das Bindebittel aus jedem Band extrahiert wird, und der Kern gesintert wird, um eine monolithische Struktur zu bilden, **dadurch gekennzeichnet,** daß die Herstellungsschritte durch Rollwälzen des Materials durchgeführt werden.

10. Verfahren nach Anspruch 9,
    **dadurch gekennzeichnet,** daß
    das Mischen in einem Hochintensitätsmischer durchgeführt wird.

11. Verfahren nach Anspruch 9 oder 10,
    **dadurch gekennzeichnet,** daß
    das Formen durch Kompressions- oder Vakuumformen der geschnittenen Bänder durchgeführt wird.

Fig.1

FIG. 2

FIG. 3A

FIG. 3B

FIG. 9

FIG. 4

FIG. 5

FIG. 6

Fig.7

FIG. 8

EP 0 275 661 B1